# EUROPEAN PATENT APPLICATION

(11) **EP 1 918 190 A1**
(43) Date of publication of application: **07.05.2008**
(21) Application number: 06022377.3
(22) Date of filing: 26.10.2006
(51) Int. Cl.: B63B 59/04, C09D 5/16, B05D 5/00, B05D 5/08, B05D 7/16

(54) **Fouling release new building coating process**

(71) Applicant: SigmaKalon B.V., 1422 AD Uithoorn (NL)
(72) Inventor: The designation of the inventor has not yet been filed
(74) Representative: Walsh, David Patrick

(57) **Abstract**

A method of coating a substrate, preferably a ship's hull, is described. The method steps comprise
(a) applying primer anti-corrosive coat to the surface of the substrate;
(b) applying a temporary antifouling coat to the primer coat(s) (a), preferably, in the area of the substrate below the water line, in use;
(c) exposing the antifouling coat to water;
(d) removing the antifouling coat (b) by water washing to expose primer coat(s) (a); and
(e) applying directly onto exposed primer coat(s) (a) from step (d) a fouling release system.

## Description

The present invention relates to a novel fouling release coating process, in particular, a fouling release coating process for use on underwater structures such as ship's hulls which may become fouled by aquatic organisms.

The presence of fouling on submerged structures can lead to a reduction in their performance, such as damage to static structures and underwater equipment or reduced speed and increased fuel consumption in ships. Antifouling systems have therefore been used to combat the detrimental effects of such fouling.

Conventional antifouling coatings are primarily composed of one or more biocides incorporated into a paint matrix. One such family of marine coatings, the highly successful self-polishing antifouling coatings based on organotin (TBT) polymers, has now been banned by legislation. Accordingly, marine coatings chemists are currently trying to improve alternative tin-free, self-polishing copolymers such as silyl or copper acrylates to match the effectiveness of TBT polymers.

Further legislation to curb the detrimental environmental effects caused by biocidal antifoulants has also led to the development of alternative coating systems. A common property of all fouling organisms is the capacity for adhesion to the substrate, and an alternative to the use of biocides is to use physical surface phenomena to disrupt the adhesion process. Low surface free energy materials based on silicone elastomers provide a possible solution and are now increasingly used as fouling resistant coatings.

Low surface free energy coatings are potentially nontoxic, nonpolluting coatings that resist adhesion of fouling organisms and are easy to clean. In theory, these nonwetting surfaces prevent fouling attachment or limit it so that it can be removed by weak forces such as those due to movement through water or gentle cleaning. There is no depletion of any active substance as would occur with conventional biocidal antifouling systems, resulting in a potentially longer life, and no toxic material release into the environment. In addition, toxic antifoulants are often specific for certain types of fouling, whereas low free surface energy coatings provide universal protection against any kind of attachment.

In practice, the low surface free energy coating system employs a tough, cross-linked thermoplastic elastomeric layer (herein called "FR tiecoat" or "Fouling Release tiecoat") to bond a foul-release silicone topcoat (herein called "FR topcoat" or "Fouling Release Topcoat") to the underlying anticorrosive layer. The mechanical properties are imparted by this FR tiecoat layer, while the FR topcoat provides the foul-release characteristics. Fouling release topcoat compositions typically include functionalized, silicone polymers, fi-llers, cross linkers, proprietary additives and catalysts. Some examples of patents further describing this technology include US 4,025,693 (International Paint), EP 0521983 (Courtaulds), US 6,013,754 (Courtaulds) and WO 05/108499 (Hempel) Application of silicon based fouling release systems in New Building is restricted by the special requirements of some shipyards, which are reluctant to use fouling release in block stage or building dock in order to avoid silicon contamination. Indeed, the properties of silicones which give rise to low free surface energies also result in low solubility parameters and, hence, incompatibility with other polymers. Therefore, great care is taken to reduce the possibility of silicone cross contamination with other surface coatings, both in manufacture and application. Therefore, fouling release coatings are being applied in dedicated pre-delivery docks, which are generally situated at a different location. Pre-delivery docking for ships built in Korea for instance might be in Dubai. For the outfitting period and for sailing from building dock to pre-delivery dock, antifouling protection is necessary.

Application of the antifouling coating is typically performed using airless spray. However, the system can be applied by brush or roller, and readily lends, itself to application by a spinning head unit for the internal surfaces of pipes.

As mentioned above, silicon containing fouling release coatings have limited tolerance with respect to adhesion. Most of them adhere only on especially designed coatings based on a two-component epoxy amine system and therefore cannot be applied directly on to another (conventional) antifouling coating. This makes the application of silicone based fouling release coatings in a different dock than a new building dock rather complicated.

In addition, coatings can only be applied in a limited window of temperature and relative humidity. Applications outside the recommended conditions can result in failures. This is a serious drawback for 24 /7 all year round application in locations with climate changes. Either conditions should be controlled or the ship moved to locations with more favourable conditions.

One solution is the application of a conventional antifouling system - prior to departure from the New Building dock. The antifouling coating can then be later removed by ultra high pressure hydrojetting (> 1750 bars) or the equivalent dry technique of abrasive blasting (sweepblasting) in pre-delivery dock. After removal of the antifouling layer the application of the fouling release system can then take place.

A problem with this system is the high pressure required to remove conventional antifoulants which causes the underlying anticorrosion (AC) tie-coat layer to be partially or totally blasted in addition to the antifouling layer. Therefore, the hull surface must be re-coated by application of a new AC primer layer. Furthermore, the blasting results in higher surface roughness, potentially leading to increased drag and higher fuel consumption.

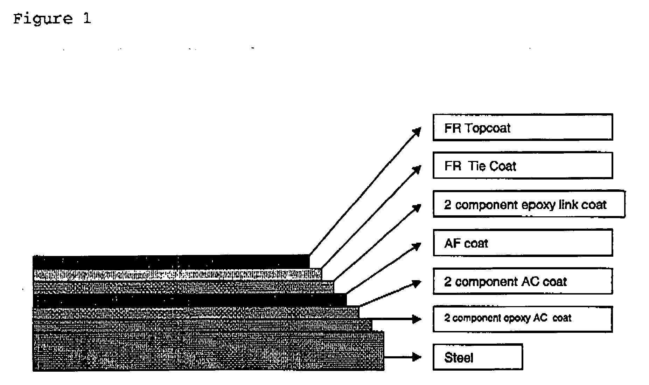

A solution to overcome these problems avoids ultra high pressure hydrojetting and uses a special link coat that can be applied on existing conventional antifouling coatings and ensures subsequent adhesion of the following fouling release system. The link coat concept may be used in both New Building and Maintenance & Repair applications. The link coat concept is attractive because it facilitates easy and fast conversion of the ship from a conventional antifouling system to a fouling release system. However this system has a major drawback as it incorporates at least six layers including a cohesively weak antifouling coat in between two strong hard epoxy coatings (see figure 1).

Unfortunately, such a sandwich system as depicted in figure 1 can suffer from delamination, mechanical damages and other defects in the sandwiched antifouling layer or on the interface of the link coat and antifouling layer caused by solvent evaporation and stress brought about by shrinkage of the overlying link coat. Additionally, the hydrophilic antifouling layer will absorb water from overlying layers (osmosis) even further weakening the coating layer.

Therefore, the solution to the use of silicone based fouling release systems has initially been to remove the conventional antifouling layer but this leads to additional expense in ultra high pressure hydrojetting (> 1750 bars) or sweep blasting (abrasive blasting) followed by re-priming to reduce hull roughness and secure sufficient anti-corrosive properties. This expense can be avoided by direct use of a link coat on the conventional antifouling layer but this introduces a weak layer into the coating system.

It is one object of the present invention to solve these problems.

According to the present invention there is provided a method of coating a substrate, preferably a ship's hull, comprising the steps of:-
(a)
   (i) applying primer anti-corrosive coat to the surface of the substrate;
   (ii) optionally applying further intermediate primer coat(s) to the primer anti-corrosive coat a(i.);
(b) applying a temporary antifouling coat to the primer coat(s)(a), preferably, in the area of the substrate below the water line, in use;
(c) exposing the antifouling coat to water;
(d) removing the antifouling coat (b) by water washing to expose primer coat(s) (a);
(e) applying directly onto exposed primer coat(s) (a) from step (d) a fouling release system, preferably consisting of,
   (i) an optional underlying primer coat;
   (ii) an intermediate silicone tie coat applied over and to the primer coat (e) (i) or applied directly over and to the said at least part of the exposed surface of primer coat(s) (a); and
   (iii) a silicone fouling release finish coat applied over and to the intermediate silicone tie-coat (e) (ii).

Preferably, the water washing step (d) is carried out in such a manner that the underlying primer coat(s) (a) remain substantially intact ie. its average surface roughness is not substantially increased, for instance not increased by 50% and/or it is not removed or partially removed from the substrate or underlying primer coat.

Preferably, the temporary antifoulant is selected and applied so that it may be removable by water washing at a pressure of < 10,000psi, at least after exposure step c) but is not completely removed in the exposure step itself.

Preferably, when the temporary antifouling layer b) is a self polishing antifoulant, the erosion rate in water, preferably, sea water, and the initial coating thickness are selected to be suitable to protect the substrate during the outfitting period and during transportation to pre-delivery dock. Typically, less than 60%, more typically less than 50% of the original coating thickness will be present on delivery to pre-delivery dock.

Typical erosion rates in sea water are greater than 1 microns/month, more preferably, greater than 2 microns/month, most preferably, greater than 5 microns/month. Where antifouling biocides are used, whether self polishing or not, they are selected to have sufficient antifouling activity for the outfitting and transportation to pre-delivery dock period.

As defined, the antifouling coat is preferably capable of being washed off by water washing such as low pressure water cleaning or high pressure water cleaning as defined herein. Preferably, it is capable of being washed off irrespective of the period of exposure in (c) which may, typically, vary between 1-2 days and 1-2 years. The exposure step (c) will typically include transport of the ship, via sea, to a different location which may take up to several weeks but it will also typically include the outfitting period which may typically be up to one year. Accordingly, the antifouling coat is capable of antifouling activity during sea water exposure for up to 1 year followed by relocation to the pre-delivery dock (and a waiting period at the pre-delivery dock) prior to its removal by water washing. Accordingly, although the antifouling coat is capable of removal by water washing, the coating should be sufficiently thick to meet application requirements during the outfitting period and transport to pre-delivery dock.

Preferably, in step a(i) the primer coat is an epoxy primer coat. Preferably, prior to step (b) an intermediate epoxy coat (a)(ii) is applied over the primer coat, preferably, over an epoxy primer coat. Preferably, the primer and the optional intermediate coat is applied over the complete outside hull, both the boat topside area and the vertical side and flat bottom underwater area of the ship's hull. Advantageously, the intermediate primer coat has the advantages of being overcoatable by antifouling coat (b) and is also overcoatable by conventional anticorrosive layers, typically, epoxy anticorrosive layers, and/or polyurethanes, even after several weeks/months exposure to UV radiation above the water line. Accordingly, intermediate coat a(ii) is particularly suitable as a primer top coat prior to step (b).

Typically, the exposure step (c) incorporates the outfitting period, eventual sea trials and transporting the ship to a different location for application of steps (d)-(e). Typically, the exposure step between steps (b) and (d) lasts in excess of 8 weeks, more typically, in excess of 12 weeks, most typically, in excess of 16 weeks. For shorter outfitting periods, it is not yet economically interesting to apply a temporary AF coat.

The uneroded antifouling coat (b) can be removed in step (d) by high or low pressure water washing. Suitable water washing techniques include :
**1. High pressure Water Jetting (HP WJ):** Cleaning performed at pressures from 70 to 170 MPa (10,000 to 25,000 psi)
**2. Ultrahigh Pressure Water Jetting (D8P WJ):** Cleaning performed at pressures above 170 MPa (250,000 psi)
**3. Low and High Pressure Water Cleaning :**
   **(a) Low Pressure Water Cleaning (LP WC):** Cleaning performed at pressures less than 34 MPa (5,000 psi)
   **(b) High Pressure water Cleaning (HP wC):** Cleaning performed at pressures from 34 to 70 MPa (5, 000 to 10,000 psi)

Typically, the process of this invention only requires water pressures lower than 10,000 psi, such as those techniques defined in 3 (a) and/or (b)above.

Generic Terms: the terms hydroblasting, hydrojetting, and water jetting describe the process in which pressurized water is directed through a nozzle to impact a surface. For purposes of this application, hydroblasting, hydrojetting, and water jetting essentially mean the same thing. However, it is noted that the term hydroblasting is used elsewhere to describe cleaning methods that range from low pressure water cleaning to ultrahigh pressure water jetting.

The thickness of the temporary antifouling coat should be chosen so as to protect the hull during all the outfitting period and prior to its removal. On the other hand, it should not be too thick because this may delay removal.

As an alternative to using an antifouling tie-coat to prevent delamination of the initial antifouling coat, the inventors have solved the associated problems counter-intuitively by applying an initial antifouling coat which is washable by low pressure water washing and, optionally, has a high erosion rate, directly on to a primer coat. By subsequently removing this initial antifouling coat completely, the known delamination problems of subsequent coats are avoided and a link-coat between the initial antifoulant and the silicone tie-coat is no longer required. Still further, the inventor's solution is particularly surprising because the main thrust of research in marine paint technology is directed to preventing delamination and to provide components in paints which will assist overcoating such as the overcoating of antifoulants.

To solve the problem in such a unique way by full removal of the initial anti-fouling coat at lower pressure is both counter-intuitive and commercially advantageous by avoiding the need for special link coats and tie coats for the initial antifoulant and by avoiding the primer recoating required after prolonged ultra high pressure water washing and the consequent damage to the primer layer, resulting in higher hull roughness and higher fuel cost:fouling release is more efficient on smooth hulls. In addition, the fundamental problem of delamination of overcoats, above the initial antifouling coat, delamination of the initial antifouling coat itself from the primer substrate and mechanical damages inflicted by harbour fenders is thereby avoided whilst providing a stronger primer substrate for the fouling release system. Accordingly, in step (d) the term removing should preferably be taken to mean complete removal of the antifouling coat (b) prior to the application of the fouling release system directly to the layer, preferably an intact continuous layer, underlying the initial antifouling coat.

Preferably, the antifouling coat (b) is capable of completely being removed by low or high pressure water washing in a reasonable time frame, preferably at least 50m²/hour, more preferably at least 100m²/hour, most preferably at least 150 m²/hour, preferably using a single standard low pressure water washing apparatus such as the Therm 1165 from Kränzle and under the pressures disclosed herein.

Suitable antifouling coat compositions (b) according to the invention may be selected from those skilled in the art which are water washable. Examples include fast-polishing conventional antifouling coatings or high-activity biocide-release coatings.

The low pressure water washing could include one or more additives in the water suitable to assist the removal of the antifouling coat. For instance, removal of calcium alginate based coatings can be assisted by EDTA. Such calcium alginate coatings can be made in a facile manner by mixing a sodium alginate solution with a calcium salt (example CaCl₂) gelling agent. The solution can then be coated to form a film. The calcium chelates the carboxylate groups in the alginate chains and thereby cross-links the alginate. Calcium alginate is a tough, flexible coating when dried but if the coating is exposed to a strong calcium chelator, the calcium dependent cross-links are broken and the coating disintegrates. Suitable additives in the low pressure water washing solution for calcium alginate based films are sodium citrate and EDTA.

It will usually be advantageous to include primer-silicon tie-coat (i) as the first coat of the FR system but this is not essential and in some cases the silicone tie coat can be applied directly onto the exposed primer coat(s) (a).

In the present invention, the term coat indicates a coat derived from one or more applied layers. Typically, each primer AC such as an epoxy primer AC is 1-3 layers, each further intermediate primer coat is 1-2 layers each initial antifouling coat is 1-2 layers.

The total dry film thickness of the antifouling coat (b) immediately after application is typically 20-500µm, more typically 30-400µm, most typically 40-300µm.

The substrate to be coated in the method of the invention is preferably a ship's hull but the method of the invention may also be applied to other transportable underwater structures such as oil rig platforms.

Typically, the antifouling coat will be exposed to seawater in step (c) as ships are rarely transported from an outfitting dock to a pre-delivery dock exclusively by fresh water transport such as a lake or river. However, a fresh water route forming part of the exposure step (c) is not excluded from the invention.

The primer anti-corrosive coatings and the primer intermediate coating(s) may be selected from any such suitable coating material but are most generally based on two-component epoxy-amine systems, well known to those skilled in the art, and for example described in C.H.Hare's book "Protective Coatings, Fundamentals of Chemistry and Composition" (Technology Publishing Company, Pittsburgh 1994).

Coating application of any of the coatings can be carried out by ordinary application methods such as brush, roller or spray. Coating application of the primer layers is carried out within a usable time interval after the coating solution and the curing agent have been mixed. The usable time is generally 30 minutes to 8 hours. Drying is generally carried out at ordinary temperature, and drying time is generally from 8 to 24 hours.

The total dry film thickness of the primer anti-corrosive coat (a) (i) is typically 30-500µm, more typically 40-400µm, most typically 50-200µm. Intermediate primer coat(s) (a) (ii) may be 30-500µm, more typically 40-400µm, most typically 50-200µm.
Suitable silicone tie coats e(ii)are well known to those skilled in the art, for example those described in US 4,861,670.

The fouling release system includes a silicone fouling release finish coat. Typically, this is a polysiloxane based coating such as polydialkyl siloxanes, for example, polydimethylsiloxane. The polysiloxane based coating may be a two component or a one component coat. Preferably, the coating is a two part composition. It may comprise at least one reactive silicone, at least one condensation catalyst and at least one crosslinking agent.

The reactive silicone is preferably at least one of a polydialkylsiloxane, a polydiarylsiloxane, or a polyalkylarylsiloxane typically of the formula 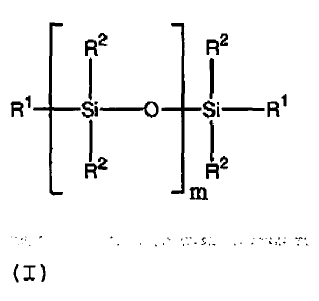 wherein each R¹ is a hydroxyl radical or 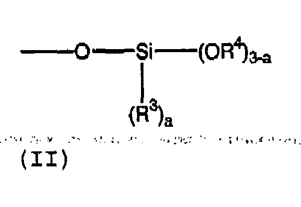 each R² independently represents a hydrocarbon or fluorinated hydrocarbon radical, each R³ and R⁴ independently represents a hydrocarbon radical, a is 0 or 1, and m has a value such that the viscosity of said compound under ambient temperature and pressure conditions is up to 50,000 centipoise. Examples of hydrocarbon radicals are C₁₋₂₀ alkyl, C₆₋₂₀ aryl, C₆₋₂₀ alkaryl, vinyl, isopropenyl, allyl, butenyl and hexenyl. Preferred examples include phenyl, C₁₋₄ alkyl and especially methyl. An example of a fluorinated hydrocarbon radical is 3, 3, 3-trifluoropropyl. Preferably, each R², R³ and R⁴ is alkyl and more preferably methyl. The biofouling release coatings may comprise two or more reactive silicones, differing in average molecular weight, which give a bimodal composition known to have advantages over a simple monomodal composition.

The condensation catalyst may be any of those known to be useful for promoting condensation curing of an RTV material. Suitable catalysts include tin, zirconium, titanium, and aluminum compounds. Examples include dibutyltin dilaurate, dibutyltin diacetate, dibutyltin methoxide, dibutyltin bis(acetylacetonate), 1,3-dioxypropane-titanium bis(acetylacetonate), titanium naphthenate, tetrabutyl titanate, zirconium octanoate, and aluminum acetylacetonate. Various salts of organic acids with such metals as lead, iron, cobalt, manganese, zinc, antimony and bismuth may also be used. Preferred catalysts are the tin and titanium compounds.

Suitable crosslinking agents include trifunctional (T) and tetrafunctional (Q) silanes. The term "functional" in this context means the presence of a silicon-oxygen bond. Suitable crosslinking agents include methyltrimethoxysilane, methyltriethoxysilane, 2-cyanoethyltrimethoxysilane, methyltriacetoxysilane, tetraethyl silicate and tetra-n-propyl silicate. Preferably, the Q-functional compounds, tetraalkyl silicates, are used.

Other additives include reinforcing and extending (non-reinforcing) fillers. Suitable reinforcing fillers are commercially available in the form of relatively large aggregated particles typically having an average size significantly greater than 300 nanometers (nm). Preferred fillers are the silica fillers, including fumed silica and precipitated silica. Those two forms of silica have surface areas in the ranges of 90-325 and 8-150 m²/g, respectively.

The reinforcing filler may be pretreated with a treating agent to render it hydrophobic. Typical treating agents may be selected from cyclic silicones such as cyclooctamethyltetrasiloxane and acyclic and cyclic organosilazanes such as hexamethyldisilazane, 1,3-divinyl-1,1,3,3-tetramethyidisilazane, hexamethylcyclotrisilazane, octamethyl cyclotetrasilazane, and mixtures thereof. An especially preferred treating agent is hexamethyldisilazane.

Non-reinforcing fillers may be selected from titanium dioxide, lithopone, zinc oxide, zirconium silicate, iron oxides, diatomaceous earth, calcium carbonate, glass fibers or spheres, magnesium oxide, chromic oxide, zirconium oxide, aluminum oxide, crushed quartz, calcined clay, talc, kaolin, asbestos, carbon, graphite, cork, cotton and synthetic fibres.

The relative proportions of the various constituents of the silicone composition may be varied within wide limits.

The amount of filler is typically about 5-200 parts and more typically 10-150 parts by weight per 100 parts of reactive silicone. Catalysts and crosslinkers may be present in the amounts of 0.001-2.5% and about 0.25-5.0% by weight respectively, based on the combination of reactive silicone and filler.

Suitable addition curable silicone coating materials may also be employed for the fouling release coat. Such addition curable coating materials are known to those skilled in the art such as those described in EP 0874032.

The silicone FR finish coat may be 10-600µm, more typically 20-500µm, most typically 30-400µm dried film thickness.

The invention will now be illustrated without restriction by reference to the accompanying examples.

### Figure 1 shows prior art.coating layers using a link coat.

Figure 1 has been described in the preamble to the application.

### Example 1

Example 1 is an antifouling paint formulation suitable for the antifouling coat of step (b).

### Example 1 Formulation

| | % w/w |
|---|---|
| Seanine 211 | 3.03 |
| VP-(meth)acrylate copolymer | 17.62 |
| Rosin | 8.81 |
| Byk 065 | 0.30 |
| Cloparin 50 | 1.56 |
| Econea 028 | 3.11 |
| Disparlon 6650 | 0.41 |
| ZnO | 24.15 |
| Finntalc M 40 | 11.74 |
| Bayferrox 222 FM | 7.86 |
| Bentone S-D2 | 1.03 |
| Xylene | 20.38 |

This paint had the following characteristics: solid content by volume 55.8 %, viscosity 20 dPas at 28°C (Physica rheometer MCl), density 1.60 g/ml.

### Example 2

Example 2 is a further antifouling paint formulation suitable for the antifouling coat of step (b).

### Example 2 Formulation

| % | w/w |
|---|---|
| Polyace 100 | 24.45 |
| SCR silyl ester | 7.70 |
| Sea-nine 211 | 2.88 |
| Thixatrol ST | 1.06 |
| Econea 028 | 3.04 |
| ZnO | 38.96 |
| Bayferrox 222 FM | 7.69 |
| Sylosiv A4 | 1.19 |
| xylene | 13.02 |

This paint had following characteristics : solid content by volume 47 %, viscosity 20 dPas at 28°C (Physica rheometer MC1), density 1.58 g/ml.

To test fouling performance and washability the temporary antifoulants were applied on steel discs (diameter 20 cm). The application was conducted by means of the air spray technique under air pressure of 4 bar and with a nozzle opening of 2.0 mm. The applied dry film thickness was 300 µm. The substrate for the antifouling coatings was a long overcoatable epoxy primer at dry film thickness 125 µm and a commercial anticorrosive epoxy primer (SigmaPrime 200™ from Sigma Coatings) at dry film thickness 125 µm.

Performance of selected antifouling systems was tested on a test station using sea water.

The test cycle consisted of 4 test series A, B, C, D as follows:

| | Atmospheric exp. | immersion, | Polishing | Total |
|---|---|---|---|---|
| A. | 1 month | 1 month | 1 month | 3 months |
| B. | 3 months | 3 months 1 | month | 7 months |
| C. | 4 months | 2 months | 1 month | 7 months |
| D. | 5 months | 14 months | 1 month | 20 months |

Atmospheric exposure took place in the exposition field and static immersion on the raft test station. Polishing was simulated with motors rotating at a speed of 17 knots and immersed in sea water. The dry film thickness of applied systems was measured before atmospheric exposure, before and after static immersion, after the polishing test and after the washing off process. This way the reduction of dry film thickness after every test was monitored.

The removal of the temporary antifoulants was conducted with a high pressure fresh water washing equipment (Therm 1165 from Kränzle) with water pressure at 160 bar, nozzle 2.0 mm and angle 30°. The distance between the nozzle and the substrate was 30 cm.

After complete removal of the antifoulant, a commercial fouling release system (125 µm SigmaShield™ 620, 150 µm SigmaGlide™ 790, 150 µm SigmaGlide™890, all from Sigma Coatings) was applied on the long overcoatable epoxy primer. The intercoat adhesion was checked by means of crosscut test according to ASTM D 3359 and in all cases was found excellent.

In the above formulations, Seanine 211 is a biocide available from Rohm & Haas. VP- (meth) acrylate copolymer is a 50% in xylene solution of a vinyl pyrrolidone - alkyl (meth)acrylates copolymer which was produced by polymerizing 22.5 methyl methacrylate, 42.5g methyl acrylate, 25g vinylpyrrolidone and 10 g butyl acrylate in 100g xylene, using TBPEH as initiator; the obtained polymer solution has a viscosity of 13 dPa.s for a solids content of 52%. Mw (by GPC)= 31700 (d=2.7)

Byk 065 is a wetting agent available from Byk-Chemie.
Cloparin 50 is a chlorinated paraffins plasticizer available from Hoechst.
Econea 028 is a biocide from Janssen Pharmaceutica.
Disparlon 6650, Thixatrol ST and Bentone S-D2 are thixotropic agents available respectively from Kusumoto, Elementis and Ashland Sud-Chemie.
Bayferrox 222 FM is Iron Oxide pigment from Bayer.
Finntalc M40 is a talc filler available from Omya.

ZnO is zinc oxide available from Union Minière.
Polyace 100 is a commercial silyl acrylate polymer from Nitto Kasei.
SCR silyl ester is obtained from the reaction between ethyltriacetoxysilane and rosin as described below.

### Production of SCR silyl ester

817g of Indonesian Gum rosin, 211g of ethyltriacetoxy silane and 578g of xylene were put in a reactor equipped with a mechanical stirrer and a distillation column with cooler and receiver. The mixture was heated to 135°C, the initial distillation temperature of the xylene/acetic acid azeotrope with a column head temperature of 115°C. The temperature was slowly raised to 160°C. An additional 200ml xylene was added to the reaction mixture after obtaining 390ml of distillate. The distillation was then continued until 650ml of distillate had been obtained and the column head had reached a temperature of 136°C . The yield of acetic acid was 99.5%. The remaining resin had a solids of: 78% and a viscosity of 170 cPa.s..

Sylosiv A4 is a zeolite drying agent from WR Grace.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except' combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of coating a substrate, preferably a ship's hull, comprising the steps of:-
a)
(i) applying a primer anti-corrosive coat to the surface of the substrate;
(ii) optionally applying further intermediate primer coat(s) to the primer anti-corrosive coat a(i);
b) applying a temporary antifouling coat to the primer coat(s)(a), preferably, in the area of the substrate below the water line, in use;
c) exposing the antifouling coat to water;
d) removing the antifouling coat (b) by water washing to expose primer coat(s) (a);
e) applying directly onto exposed primer coat(s) (a) from step (d) a fouling release system, preferably consisting of,
(i) an optional underlying primer coat;
(ii) an intermediate silicone tie coat applied over and to the primer coat (e) (i) or applied directly over and to the said at least part of the exposed surface of primer coat(s) (a); and
(iii) a silicone fouling release finish coat applied over and to the intermediate silicone tie-coat (e) (ii).

2. A method of coating a substrate according to claim 1, wherein the water washing step (d) is carried out, in such a manner that the underlying primer coat(s) (a) remain substantially intact.

3. A method of coating a substrate according to claim 1 or 2, wherein the antifouling coat (b) is capable of being washed off by low pressure water cleaning or high pressure water cleaning.

4. A method of coating a substrate according to any preceding claim, wherein in step a(i) the primer coat is an epoxy primer coat.

5. A method of coating a substrate according to any preceding claim, wherein prior to step (b) an intermediate epoxy coat (a)(ii) is applied over the primer coat.

6. A method of coating a substrate according to any preceding claim, wherein the exposure step between steps (b) and (d) lasts in excess of 8 weeks.

7. A method of coating a substrate according to any preceding claim, wherein the water washing step (d) is carried out using water pressure lower than 10,000 psi.

8. A method of coating a substrate according to any preceding claim, wherein the primer anti-corrosive coatings and/or the primer intermediate coating(s) are selected from two-component epoxy-amine systems.

9. A method of coating a substrate according to any preceding claim, wherein the total dry film thickness of the primer anti-corrosive coat (a) (i) is typically 30-500µm.

10. A method of coating a substrate according to any preceding claim, wherein the fouling release system includes a silicone fouling release finish coat which is a polysiloxane based coating.

11. A method of coating a substrate according to any preceding claim, wherein the total dry film thickness of the antifouling coat (b) immediately after application is 30-500µm.
